# EUROPÄISCHE PATENTANMELDUNG

(11) **EP 4 328 459 A1**
(43) Veröffentlichungstag der Anmeldung: **28.02.2024**
(21) Anmeldenummer: 22191614.1
(22) Anmeldetag: 23.08.2022
(51) Int. Cl.: F16C 17/02, B02C 15/00, F16C 33/10, F16C 33/66, F16H 57/04

(54) **SCHMIERSTOFFÜBERGABEANORDNUNG FÜR EINE SCHMIERSTOFFVERSORGUNG EINES GETRIEBES**

(71) Anmelder: Flender GmbH, 46395 Bocholt (DE)
(72) Erfinder: HÖBING, Mathias, 46395 Bocholt (DE); PRUSAK, Robert, 46395 Bocholt (DE)
(74) Vertreter: Michalski Hüttermann & Partner Patentanwälte mbB

(57) **Zusammenfassung**

Es ist ein Schmierstoffübergabeanordnung (10) für eine Schmierstoffversorgung eines Getriebes vorgesehen mit einem äußeren Getriebebauteil (18), einem relativ zu dem äußeren Getriebebauteil (18) drehbaren inneren Getriebebauteil (14), einem Gleitlager (16) zur Lagerung des äußeren Getriebebauteils (18) an dem inneren Getriebebauteil (14), wobei zwischen dem äußeren Getriebebauteil (18) oder dem inneren Getriebebauteil (14) einerseits und dem Gleitlager (16) andererseits mindestens eine Schmierstofftasche (20) ausgebildet ist, wobei ein durch das äußere Getriebebauteil (18), das Gleitlager (16) und das innere Getriebebauteil (14) hindurchführender Schmierstoffkanal (22) zur Versorgung einer an einem stromabwärts liegenden Ende des Schmierstoffkanals (22) vorgesehenen zu schmierenden Getriebekomponenten ausgebildet ist, wobei der Schmierstoffkanal (22) an der Schmierstofftasche (20) vorbei verläuft und wobei zwischen dem äußeren Getriebebauteil (18) oder dem inneren Getriebebauteil (14) einerseits und dem Gleitlager (16) andererseits eine den Schmierstoffkanal (22) mit der Schmierstofftasche (20) fluidisch verbindende Leckagenut (30) ausgebildet ist. Mit Hilfe der zur Schmierstofftasche (20) führenden Lackagenut (30) ist eine kostengünstige und verlässliche Schmierstoffversorgung eines Getriebes ermöglicht.

## Beschreibung

Die Erfindung betrifft eine Schmierstoffübergabeanordnung, mit dessen Hilfe eine Schmierstoffversorgung eines Getriebes durch zwei relativ zueinander drehbar aneinander gelagerten Getriebebauteilen hindurch erfolgen kann.

Aus EP 3 798 470 A1 ist Schmierstoffübergabeanordnung für eine Schmierstoffversorgung eines Getriebes bekannt, bei der aus einem Ringspalt eines doppelwandigen Rohrs ein Versorgungskanal nach radial außen abzweigt, der durch eine auf das doppelwandige Rohr aufgesteckte Buchse aus Bronze hindurch zu einem zu einer Schmierstelle führenden Abfuhrkanal führt, wobei die Buchse zwischen einer das doppelwandige Rohr lagern Wälzlager/Gleitlager-Kombination vorgesehen ist.

Aus US 2017/0356493 A1 ist ein mit einem feststehende in einem Planetenträger eines Planetengetriebes befestigten Planetenbolzen ein Gleitlager zur Lagerung eines Planetenrads fest zu verbinden, wobei der Planetenradbolzen als Hohlwelle mit einem radial verlaufenden Versorgungskanal ausgebildet ist. Der Versorgungskanal setzt sich in radialer Richtung durch das Gleitlager hindurch und endet in einer in dem Gleitlager ausgebildeten Schmierstofftasche. Zudem ist zwischen dem Gleitlager und dem Planetenbolzen eine Nut in axialer Richtung ausgebildet, um einen Teil des über den Planetenbolzen zugeführten Schmieröls Axialgleitlagern zuführen zu können.

Es besteht ein ständiges Bedürfnis eine Schmierstoffversorgung von zu schmierenden Getriebekomponenten eines Getriebes möglichst kostengünstig und verlässlich vorzusehen.

Es ist die Aufgabe der Erfindung Maßnahmen aufzuzeigen, die eine kostengünstige und verlässliche Schmierstoffversorgung eines Getriebes ermöglichen.

Die Lösung der Aufgabe erfolgt durch eine Schmierstoffübergabeanordnung mit den Merkmalen des Anspruchs 1, ein Vertikalgetriebe mit den Merkmalen des Anspruchs 12, eine Industrie-Applikation mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Schmierstoffübergabeanordnung für eine Schmierstoffversorgung eines Getriebes, mit einem äußeren Getriebebauteil, einem relativ zu dem äußeren Getriebebauteil drehbaren inneren Getriebebauteil, einem Gleitlager zur Lagerung des äußeren Getriebebauteils an dem inneren Getriebebauteil, wobei zwischen dem äußeren Getriebebauteil oder dem inneren Getriebebauteil einerseits und dem Gleitlager andererseits mindestens eine Schmierstofftasche ausgebildet ist, wobei ein durch das äußere Getriebebauteil, das Gleitlager und das innere Getriebebauteil hindurchführender Schmierstoffkanal zur Versorgung einer an einem stromabwärts liegenden Ende des Schmierstoffkanals vorgesehenen zu schmierenden Getriebekomponenten ausgebildet ist, wobei der Schmierstoffkanal an der Schmierstofftasche vorbei verläuft und wobei zwischen dem äußeren Getriebebauteil oder dem inneren Getriebebauteil einerseits und dem Gleitlager andererseits eine den Schmierstoffkanal mit der Schmierstofftasche fluidisch verbindende Leckagenut ausgebildet ist.

Das äußere Getriebebauteil ist in radialer Richtung zu einer Drehachse des äußeren Getriebebauteils und/oder des inneren Getriebebauteils zumindest in einem von dem Gleitlager eingenommenen Axialbereich radial außerhalb zu dem inneren Getriebebauteil ausgebildet. Zwischen dem äußeren Getriebebauteil und dem inneren Getriebebauteil kann im bestimmungsgemäßen Betrieb eine Relativdrehung stattfinden, die durch das Gleitlager unterstützt wird. Das äußere Getriebebauteil und des innere Getriebebauteil können koaxial zu der Drehachse angeordnet sein. Hierbei ist es möglich, dass sowohl das äußere Getriebebauteil als auch das innere Getriebebauteil drehbar sind, wobei deren jeweilige Drehachsen im Wesentlichen ineinander zusammenfallen. Alternativ ist nur das äußere Getriebebauteil oder nur das innere Getriebebauteil drehbar, während das jeweils andere Getriebebauteil feststehend, also unbeweglich und/oder undrehbar, ausgestaltet ist. Das feststehende Getriebebauteil ist beispielsweise Teil eines Getriebegehäuses und/oder einer mit dem Getriebegehäuse bewegungsfest verbundenen Nabe. Das Getriebegehäuse kann bewegungsfest auf einem Untergrund abgestellt sein, wobei insbesondere das Getriebegehäuse mit dem Untergrund befestigt ist.

Das, vorzugsweise als Radialgleitlager ausgebildete, Gleitlager kann insbesondere entweder mit dem äußeren Getriebebauteil oder mit dem inneren Getriebebauteil drehfest verbunden, beispielsweise verpresst, sein. Die Schmierstofftasche kann hierbei in einer Gleitlagerpaarung, die zwischen dem Gleitlager und dem relativ zu dem Gleitlager drehbaren Getriebebauteil ausgebildet ist, vorgesehen sein. Die Schmierstofftasche kann ausschließlich von dem Gleitlager oder ausschließlich von dem relativ zu dem Gleitlager drehbaren Getriebebauteil oder zu einem Teil von dem Gleitlager und zu einem anderen Teil von dem relativ zu dem Gleitlager drehbaren Getriebebauteil ausgebildet sein. Die Schmierstofftasche kann sich teilweise in Umfangsrichtung oder vollständig in Umfangsrichtung, das heißt als in Umfangsrichtung geschlossene Ringnut, erstrecken. Beispielsweise sind zwei oder mehr Schmierstofftaschen zueinander beabstandet in Umfangsrichtung und/oder in axialer Richtung hintereinander vorgesehen. Im Bereich der Schmierstofftasche kann sich Schmierstoff, insbesondere Schmieröl, sammeln, um eine über die Erstreckung des Gleitlagers in axialer Richtung und in Umfangsrichtung einen mit Schmierstoff gefüllten reibungsreduzierenden Lagerspalt auszubilden, in dem sich insbesondere im bestimmungsgemäßen Betrieb eine hydrodynamische Schmierung ausbildet. Das Gleitlager kann ein hydrodynamisches Gleitlager ausgebildet sein.

Das äußere Getriebebauteil, das Gleitlager und das innere Getriebebauteil, durch die der Schmierstoffkanal hindurchgeführt ist, bilden zusammen gleichzeitig eine Drehdurchführung für den Schmierstoff des Schmierstoffkanal aus. Eine separate Abdichtung des Schmierstoffkanals im Bereich des Lagerspalts der Gleitlagerpaarung kann jedoch eingespart werden, wodurch Herstellungskosten, Montageaufwand und Bauteileanzahl reduziert werden können. Stattdessen kann sogar eine Leckage von Schmierstoff aus dem Schmierstoffkanal in den Lagerspalt bewusst zugelassen werden. Mit Hilfe der Leckagenut kann bewusst ein gewisser Massenstrom von Schmierstoff als Leckagestrom von dem Schmierstoffkanal zu der mindestens einen Schmierstofftasche abgezweigt werden. Dadurch kann die Schmierung des Gleitlagers verbessert und eine separate Zufuhr von Schmierstoff in den Lagerspalt und in die Schmierstofftasche reduziert oder sogar vollständig eingespart werden. Insbesondere geht die Leckagenut im Wesentlichen rechtwinkelig in axialer Richtung von dem im Bereich des Lagerspalts im Wesentlichen radial verlaufenden Schmierstoffkanal ab, so dass eine Vorzugsströmungsrichtung des Schmierstoffkanals entlang des Schmierstoffkanals vorliegt. In der Regel ist der Druck in dem Schmierstoffkanal so hoch und die Strömungsgeschwindigkeit so niedrig, dass an der Leckagenut ein gut beherrschbarer statischer Druck anliegen kann. Der Strömungsquerschnitt der Leckagenut kann in Abhängigkeit von dem im bestimmungsgemäßen Betrieb zu erwartenden Druck und der im bestimmungsgemäßen Betrieb zu erwartenden Strömungsgeschwindigkeit in dem Schmierstoffkanal derart gewählt sein, dass bei einem Schmiermittelverlust im Lagerspalt Schmierstoff aus dem Schmierstoffkanal automatisch nageführt werden kann, aber der aus dem Schmierstoffkanal kommende Schmierstoff nicht unnötig viel Schmierstoff aus dem Lagerspalt verdrängt und aus einem axialen Ende des Gleitlagers herausdrückt. Eine Leckage aus dem Schmierstoffkanal in den Lagerspalt ist dadurch sehr gering, so dass die Schmierung stromabwärts des Lagerspalts vorgesehener aus dem Schmierstoffkanal zu schmierender Getriebekomponenten nicht beeinträchtigt ist. Gleichzeitig ist der aus dem Schmierstoffkanal über die Leckagenut austretende Schmierstoff nicht vergeudet, sondern wird zur Unterstützung und Verbesserung der Gleitlagereigenschaften der mit Hilfe des Gleitlagers vorgesehene Lagerung genutzt. Besonders bevorzugt wird die Schmierstofftasche ausschließlich mit Hilfe der Leckagenut mit schmierstoff versorgt, so dass eine zu dem Schmierstoffkanal separate Schmierstoffversorgung der Schmierstofftasche eingespart werden kann. Durch die Verwendung der Gleitlagerung der Getriebebauteile als Drehdurchführung für den Schmierstoffkanal kann eine separate Abdichtung eingespart werden und stattdessen mit Hilfe der zur Schmierstofftasche führenden Lackagenut eine die Gleitlagerung unterstützende geringfügige Leckage zugelassen werden, so dass eine kostengünstige und verlässliche Schmierstoffversorgung eines Getriebes ermöglicht ist.

Die Leckagenut kann ausschließlich von dem Gleitlager oder ausschließlich von dem relativ zu dem Gleitlager drehbaren Getriebebauteil oder zu einem Teil von dem Gleitlager und zu einem anderen Teil von dem relativ zu dem Gleitlager drehbaren Getriebebauteil ausgebildet sein. Ein Strömungsquerschnitt A_{L} der Leckagenut kann im Vergleich zu einem nominellen Strömungsquerschnitt A_{S} des Schmierstoffkanals beispielsweise 0,01 ≤ A_{L}/A_{S} ≤ 0,50, insbesondere 0,02 ≤ A_{L}/A_{S} ≤ 0,25 und vorzugsweise 0,05 ≤ A_{L}/A_{S} ≤ 0,10 betragen. An der zur Gleitlagerpaarung weisenden radial inneren und/oder radial äußeren Mantelfläche kann der Schmierstoffkanal eine in Umfangsrichtung geschlossene Ringnut aufweisen, deren Strömungsquerschnitt bei der Bestimmung des Strömungsquerschnitts A_{S} des Schmierstoffkanals unberücksichtigt bleibt. Abgesehen von der gegebenenfalls vorgesehenen Ringnut kann der Schmierstoffkanal in dem äußeren Getriebebauteil, in dem Gleitlager und in dem inneren Getriebebauteil durch mindestens eine Bohrung ausgebildet sein, wobei verschiedene Bohrungen sich zur Ausbildung des Schmierstoffkanals kreuzen können und/oder an einem offenen Ende, beispielsweise mit einem Stopfen und/oder einem Dichtelement verschlossen sein können.

Der Schmierstoffkanal endet nicht in dem Lagerspalt des Gleitlagers. Stattdessen weist der Schmierstoffkanal einen von einer Schmierstoffquelle kommenden Versorgungskanal auf, der in dem Lagerspalt des Gleitlagers endet, und einen zu dem endseitig liegenden zu schmierende Getriebekomponente führenden Abfuhrkanal auf, der in dem Lagerspalt des Gleitlagers beginnt. Wenn der Versorgungskanal in dem äußeren Getriebebauteil vorgesehen ist, ist der Abfuhrkanal in dem inneren Getriebebauteil vorgesehen. Wenn der Versorgungskanal in dem inneren Getriebebauteil vorgesehen ist, ist der Abfuhrkanal in dem äußeren Getriebebauteil vorgesehen. Bei der zu schmierenden Getriebekomponente kann es sich beispielsweise um eine andere Lagerung handeln, beispielsweise ein Axialgleitlager eines Mahltellers einer Vertikalmühle. Eine derartige Vertikalmühle ist beispielsweise in DE 10 2007 057 608 A1 beschrieben, auf deren Inhalt hiermit als Teil der Erfindung Bezug genommen wird.

Unter einer fluidischen Verbindung wird eine Verbindung von Teilen eines Kanals und/oder einer Leitung verstanden, die eine Strömung eines Fluids zwischen den miteinander verbundenen Teilen ermöglicht und einen Austausch von Druck und Masse im Sinner miteinander kommunizierender Röhren vorsieht.

Der Schmierstoffkanal kann im bestimmungsgemäßen Betrieb mit einem Schmierstoff gefüllt sein. Als Schmierstoff kann insbesondere ein natürliches und/oder synthetisches Schmieröl verwendet werden. Der Schmierstoff kann vorzugsweise reibungsreduzierende und/oder wärmeabführende Additive aufweisen. Der Schmierstoff ist insbesondere bis zu einer Temperatur von 120°C temperaturbeständig, wobei insbesondere bis zu dieser Temperatur die im Schmierstoff enthaltenen Additive im Wesentlichen nicht degenerieren.

Insbesondere ist eine Leckagespalthöhe H der Leckagenut in radialer Richtung größer als eine Lagerspalthöhe h zwischen dem äußeren Getriebebauteil oder dem inneren Getriebebauteil einerseits und dem Gleitlager andererseits, wobei insbesondere 1,01 ≤ H/h ≤ 2,00, vorzugsweise 1,10 ≤ H/h ≤ 1,75 und besonders bevorzugt 1,25 ≤ H/h ≤ 1,50 gilt. Aufgrund der gewählten Leckagespalthöhe kann ein unnötig hoher Strömungswiderstand innerhalb desr Leckagenut vermieden werden, so dass die Schmierstofftasche leicht mit dem aus dem Schmierstoffkanal stammenden Schmiermittel versorgt werden kann. Die Leckagenut dann beispielsweise als eine über die axiale Erstreckung der Leckagenut mit dem Lagerspalt kommunizierende Rinne ausgestaltet sein.

Vorzugsweise ist ein in die Schmierstofftasche einmündender Verbindungskanal vorgesehen, wobei der Verbindungkanal mit einer Schmierstoffquelle zur Zufuhr von Schmierstoff in die Schmierstofftasche und/oder mit einer Schmierstoffsenke zur Abfuhr von aus dem Schmierstoffkanal stammenden Schmierstoff fluidisch verbunden ist. Die Schmierstofftasche kann über den vollständig oder zumindest teilweise zu dem Schmierstoffkanal separat ausgeführten Verbindungskanal mit der Schmierstoffquelle und/oder der Schmierstoffsenke fluidisch verbunden sein. Wenn der Verbindungskanal mit dem Schmierstoffkanal verbunden ist, ist es möglich Schmierstoff aus dem Schmierstoffkanal über die Leckagenut und die Schmierstofftasche und von der Schmierstofftasche über den Verbindungskanal, insbesondere stromaufwärts zum Gleitlager, zurück in den Schmierstoffkanal zu fördern. Wenn der Verbindungskanal separat zum Schmierstoffkanal ausgebildet ist, das heißt nicht mit dem Schmierstoffkanal verbunden ist, ist es möglich die Schmierung des Gleitlagers unabhängig von den Strömungsbedingungen in dem Schmierstoffkanal zu beeinflussen. Insbesondere bei einem Anlaufen des Getriebes es möglich über den Verbindungskanal Schmierstoff mit einem vergleichsweise hohen Druck zuzuführen, um ein hydrostatisches Gleitlager auszubilden und insbesondere bis zur Ausbildung eines hydrodynamischen Gleitlagers im regulären Betrieb Widerstandsmomente zu reduzieren.

Besonders bevorzugt weist das Gleitlager einen radial abstehenden Kragen zur axialen Anlage an dem äußeren Getriebebauteil oder an dem inneren Getriebebauteil auf. Durch den Kragen des Gleitlagers kann eine axiale Einstecktiefe des Gleitlagers relativ zu dem äußeren Getriebebauteil und/oder zu dem inneren Getriebebauteil vorgegeben werden. Dies erleichtert es, einen axialen Versatz des Schmierstoffkanals im Lagerstalt zu vermeiden. Der Strömungswiderstand des Schmierstoffkanal in der am Gleitlager ausgebildeten Drehdurchführung kann dadurch minimiert werden. Zudem kann der Kragen leicht für eine mechanische Befestigung des Gleitlagers an dem äußeren Getriebebauteil oder an dem inneren Getriebebauteil verwendet werden, beispielsweise indem der Kragen als Befestigungsflansch verwendet wird.

In einer Ausführungsform ist insbesondere vorgesehen, dass der Kragen einen Verschluss und/oder ein Dichtelement einer in axialer Richtung weisenden Öffnung eines Teilstücks des Schmierstoffkanals abdeckt, insbesondere mit einer Anpresskraft abdichtet. In dem äußeren Getriebebauteil beziehungsweise in dem inneren Getriebebauteil kann durch eine Bohrung, insbesondere Sacklochbohrung, ein in axialer Richtung verlaufender Teil des Schmierstoffkanals eingebracht sein, der aber an seiner Öffnung verschlossen sein soll, um ein Auslaufen und eine Leckage von Schmiermittel zu vermeiden. Hierzu kann der Verschluss, insbesondere ein Stopfen, oder sonstiges Dichtelement vorgesehen sein. Der die Öffnung abdeckende Kragen des Gleitlagers kann bereits eine Abdichtung in der Art einer Labyrinthdichtung bereitstellen, wobei der Kragen die Dichtwirkung noch weiter verbessern kann, indem der Kragen den Verschluss beziehungsweise das Dichtelement verpresst.

In einer weiteren Ausführungsform ist vorzugsweise vorgesehen, dass der Kragen eine in axialer Richtung weisenden Öffnung eines Teilstücks des Schmierstoffkanals abdeckt und ein mit dem Teilstück kommunizierendes weiteres Teilstück des Schmierstoffkanals ausbildet. Dies ermöglicht es einen Teil des Schmierstoffkanals und/oder des Verbindzungskanals über den Kragen des Gleitlagers zu führen. Dies eröffnet weitere konstruktive Freiheiten bei der Gestaltung einer Schmierstoffversorgung im Getriebe. Zudem ist es möglich eine ansonsten möglicherweise auftretende Materialschwächung in dem äußeren Getriebebauteil und/oder in dem inneren Getriebebauteil durch die Bereitstellung eines Teils des Schmierstoffkanals und/oder des Verbindzungskanals zu vermeiden oder zu reduzieren.

Besonders bevorzugt ist vorgesehen, dass der Kragen eine in axialer Richtung weisenden Öffnung eines mit der Schmierstofftasche kommunizierenden und separat zum Schmierstoffkanal ausgebildeten Verbindungkanal abdeckt und ein mit dem Verbindungkanal kommunizierenden weiteren Verbindungkanal ausbildet. Der Verbindungskanal kann über den Kragen des Gleitlagers geführt werden, so dass der Verbindungskanal leicht zu dem Schmierstoffkanal beabstandet verlaufen kann. Eine gegenseitige Störung und/oder eine unnötige Materialschwächung in dem äußeren Getriebebauteil und/oder in dem inneren Getriebebauteil kann dadurch vermieden werden.

In einer Ausführungsform sind inbesondere mindestens zwei Schmierstofftaschen zumindest teilweise in einem gemeinsamen Umfangswinkelbereich in axialer Richtung hintereinander ausgebildet, wobei der Schmierstoffkanal in axialer Richtung zwischen den zwei Schmierstofftaschen hindurchgeführt ist und der Schmierstoffkanal über jeweils eine in unterschiedliche Axialrichtungen von dem Schmierstoffkanal abgehende Leckagenuten mit den Schmierstofftaschen fluidisch verbunden ist. Durch die Mehrzahl der Schmierstofftaschen kann die Trägfähigkeit und/oder die Schmierung des Gleitlagers geeignet vorgegeben werden. Da der Schmierstoffkanal in axialer Richtung zwischen zwei Schmierstofftaschen verläuft, ist es möglich in beiden axialrichtungen symmetriesche Verhältnisse für den Verlauf der Leckagenuten vorzusehen, wodurch eine gelichmäßige Versorgung der Schmierstofftaschen mit Schmierstoff sichergestellt werden kann. Inbesondere ist es möglich, dass in Umfangsrichtung verstezte Reihen von in axialer Richtung hintereinander angeordneter Schmierstofftaschen vorgesehen sind, wobei für jede Reihe von Schmierstofftaschen in dem jeweiligen Umfangswinkelbereich Leckagenuten vorgesehen sein können.

In einer weiteren Ausführungsform ist vorzugsweise vorgesehen, dass von dem Schmierstoffkanal nur in einer Axialrichtung die Leckagenut, insbesondere nur genau eine Leckagenut, abgeht, wobei insbesondere nur in genau einem Axialbereich die Schmierstofftasche, insbesondere nur genau eine Schmierstofftasche, ausgebildet ist. Der Herstellungsaufwand und damit die Herstellungskosten können dadurch gering gehalten werden.

Besonders bevorzugt verläuft die Leckagenut überwiegend in vertikaler Richtung, wobei insbesondere zumindest ein Teil des Schmierstoffs aus der dem Schmierstoffkanal schwerkraftunterstützt durch die Leckagenut förderbar ist. Die Schmierstoffversorgung der mindestens einen Schmierstofftasche aus dem Schmierstoffkanal kann dadurch schwerkraftunterstützt und dadurch passiv erfolgen. Dies ermöglicht zur Bereitstellung eines gewünschten Förderstroms entlang der Leckagenut einen geringen Strömungsquerschnitt für die Leckagenut vorzusehen, wodurch die Tragfähigkeit des Gleitlagers verbessert sein kann.

Insbesondere ist das äußere Getriebebauteil oder das innere Getriebebauteil als feststehendes Getriebegehäuseteil ausgestaltet. Dies erleichtert es eine Schmierstoffquelle und/oder eine Schmierstoffsenke an dem Schmierstoffkanal anzuschliessen. Unnötige Drehdurchführungen können dadurch vermieden werden.

Ein weiterer Aspekt der Erfindung betrifft ein Vertikalgetriebe, insbesondere zum Betrieb einer Vertikalmühle, mit einer im Wesentlichen vertikal ausgerichteten Welle und einer Schmierstoffübergabeanordnung, die wie vorstehend beschrieben aus- und weitergebildet sein kann, wobei die Welle das innere Getriebebauteil oder das äußere Getriebebauteil ausbildet. Eine geeignete Vertikalmühle ist beispielsweise in DE 10 2007 057 608 A1 beschrieben, auf deren Inhalt hiermit als Teil der Erfindung Bezug genommen wird. Das Vertikalgetriebe und/oder die mit Hilfe des Vertikalgetriebes ausgebildete Vertikalmühle kann insbesondere wie vorstehend beschreiben aus- und weitergebildet sein. Durch die Verwendung der Gleitlagerung der Getriebebauteile als Drehdurchführung für den Schmierstoffkanal kann eine separate Abdichtung eingespart werden und stattdessen mit Hilfe der zur Schmierstofftasche führenden Lackagenut eine die Gleitlagerung unterstützende geringfügige Leckage zugelassen werden, so dass eine kostengünstige und verlässliche Schmierstoffversorgung des Vertikalgetriebe und/oder der Vertikalmühle ermöglicht ist.

Vorzugsweise ist die Welle drehfest mit einem Planetenträger eines Planetengetriebes verbunden, wobei insbesondere mit dem Planetenträger ein Mahlteller einer Vertikalmühle befestigt ist. An dem Planetenträger kann mindestens ein Planetenrad, vorzugsweise drei, fünf oder sieben Planetenräder, gelagert sein, das mit einem Sonnenrad und/oder einem Hohlrad kämmt. Das Hohlrad ist insbesondere feststehend und undrehbar, wobei das Hohlrad vorzugsweise unbeweglich mit einem Gehäuseteil des Vertikalgetriebes und/der der Vertikalmühle befestigt ist. Das Sonnenrad kann mit einer Sonnenradwelle befestigt sein, die von einem Antriebsmotor, vorzugsweise über mindestens eine zwischengeschaltete Übersetzungsstufe, angetrieben werden kann. Der Schmierstoff des Schmierstoffkanals kann insbesondere über das Gehäuse und die zwischen dem Gehäuse und der Welle ausgebildete Schmierstoffübergabeanordnung in die Welle geführt werden, wo der Schmierstoff entlang der Welle bis zu einem den Mahlteller lagernden und abstützenden Axialgleitlager geführt werden kann.

Ein weiterer Aspekt der Erfindung betrifft eine Industrie-Applikation mit einem Getriebe, insbesondere Vertikalgetriebe, das wie vorstehend beschrieben aus- und weitergebildet sein kann, wobei das Getriebe mindestens eine zu schmierenden Getriebekomponente und mindestens eine Schmierstoffübergabeanordnung, die wie vorstehend beschrieben aus- und weitergebildet sein kann, zur Förderung von Schmiermittel an die zu schmierende Getriebekomponente aufweist. Die Industrie-Applikation kann ein Antriebsmittel aufweisen, das beispielsweise als elektrische Maschine, Brennkraftmaschine, Hydraulikmotor oder windkraftgetriebener Rotor ausgestaltet sein kann. Das Antriebsmittel kann mit einem Getriebe zur Wandlung eines Drehmoments und einer Drehzahl der von dem Antriebsmittel erzeugten Leistung gekoppelt sein, wobei das Getriebe wie vorsteehnd beschrieben aus- und weitergebildet sein kann. Das Getriebe der Industrie-Applikation kann wiederum drehmomentübertragend mit einer mechanischen Anwendung gekoppelt sein, in der über das Getriebe eingeleitete mechanische Energie genutzt werden kann. Bei der mechanischen Anwendung handelt es sich beispielsweise um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierten, Abfällen oder Ähnliches. Durch die Verwendung der Gleitlagerung der Getriebebauteile als Drehdurchführung für den Schmierstoffkanal kann eine separate Abdichtung eingespart werden und stattdessen mit Hilfe der zur Schmierstofftasche führenden Lackagenut eine die Gleitlagerung unterstützende geringfügige Leckage zugelassen werden, so dass eine kostengünstige und verlässliche Schmierstoffversorgung der Industrie-Applikation ermöglicht ist.

Ein weiterer Aspekt der Erfindung betrifft ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Schmierstoffübergabeanordnung,die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung eine additive Herstellung der Bestandteile der Schmierstoffübergabeanordnung, insbesondere durch 3D-Druck, und/oder eine Simulation der Funktionsweise der Schmierstoffübergabeanordnung durchzuführen. Das Datenagglomerat kann in der Art eines sogenannten "digital twin" eine virtuelle Verkörperung der jeweiligen Vorrichtung, insbesondere der vorstehend beschriebenen Schmierstoffübergabeanordnung, des Vertikalgetriebes und/oder der Vertikalmühle, darstellen, die eine virtuelle Untersuchung in Form einer Simulation oder eine reale Vergegenständlichung mit Hilfe eines additiven Fertigungsverfahrens ermöglicht. Hierbei kann insbesondere jeweils ein Datenpaket einen separat ausgeführten Bestandteil der jeweiligen zugeordneten Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Dies ermöglicht eine kostengünstige Herstellung von Prototypen und/oder eine kostengünstige computerbasierte Simulation, um die Funktionsweise der Schmierstoffübergabeanordnung, des Vertikalgetriebes und/oder der Vertikalmühle zu studieren, Probleme im konkreten Anwendungsfall zu identifizieren und Verbesserungen zu finden. Durch die Verwendung der Gleitlagerung der Getriebebauteile als Drehdurchführung für den Schmierstoffkanal kann eine separate Abdichtung eingespart werden und stattdessen mit Hilfe der zur Schmierstofftasche führenden Lackagenut eine die Gleitlagerung unterstützende geringfügige Leckage zugelassen werden, so dass eine kostengünstige und verlässliche Schmierstoffversorgung ermöglicht ist, was mit Hilfe des Datenagglomerats leicht und kostengünstig überprüft werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht einer ersten Ausführungsform einer Schmierstoffübergabeanordnung,
Fig. 2: eine schematische Schnittansicht einer zweiten Ausführungsform einer Schmierstoffübergabeanordnung,
Fig. 3: eine schematische Schnittansicht einer dritten Ausführungsform einer Schmierstoffübergabeanordnung und
Fig. 4: eine schematische Schnittansicht einer vierten Ausführungsform einer Schmierstoffübergabeanordnung.

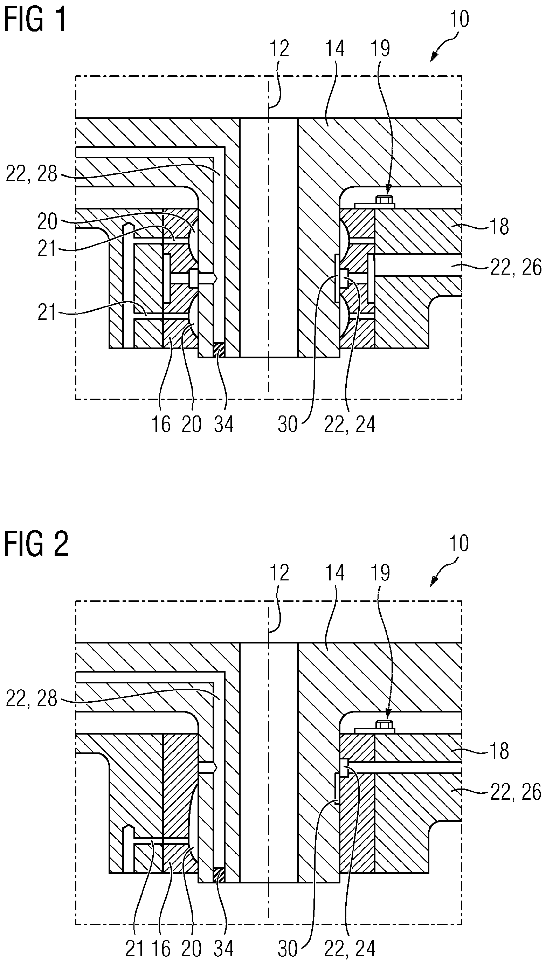

Die in Fig. 1 dargestellte Schmierstoffübergabeanordnung 10 kann Teil eines Vertikalgetriebes für eine Vertikalmühle sein und weist in dem dargestellten Ausführungsbeispiel eine vertikal ausgerichtete Drehachse 12 auf, um die ein inneres Getriebebauteil 14 rotieren kann. Das innere Getriebebauteil 14 ist beispielsweise als Planetenträger eines Planentengetriebes ausgestaltete, wobei der Planetenträger mit einem nicht dargestellten Mahlteller der Vertikalmühle drehfest verbunden sein kann. Der Mahlteller kann in einem zu schmierenden Axialgleitlager gelagert und abgestützt sein. Das innere Getriebebauteil 14 ist über ein Gleitlager 16 in einem äußeren Getriebebauteil 18 gelagert. Im dargestellten Ausführungsbeispiel ist das als Radialgleitlager ausgestaltete Gleitlager 16 mit dem äußeren Getriebebauteil 18 fest verbunden, beispielsweise eingepresst und/oder über eine Verschraubung 19 mechanisch befestigt. Es ist aber auch möglich, dass das Gleitlager 16 mit dem inneren Getriebebauteil 14 fest verbunden ist und eine Relatrivdrehung zum äußeren Getriebebauteil 18 erfährt. Das äußere Getriebebauteil 18 ist insbesondere Teil eines feststehenden Getriebegehäuses, mit dem vorzugsweise ein nicht dargestelltes Hohlrad des Planetengtriebes bewegungsfest verbunden ist. Nicht dargestellte an Planetenträder können mit dem Hohlrad und einem nicht dargestellten Sonnenrad einer nicht dargestellten Sonnenradwelle kämmen, wobei die Sonnenradwelle, vorzugsweise über midestens eine als Strinradstufe und/oder als Kegelradstufe ausgestaltete Übersetzungsstufe von einem Antriebsmotor angetrieben werden kann.

In einem Lagerspalt zwischen dem Gleitlager 16 und dem inneren Getriebebauteil 14 sind Schmierstofftaschen 20 ausgebildet, die aus Gründen der besseren Darstellung übertrieben dargestellt sind. Im dargestellten Ausführungsbeispiel sind die Schmierstofftaschen 20 ausschließloch in dem Gleitlager 16 ausgebildet, wobei es auch möglich ist, dass mindestens eine oder alle Schmierstofftaschen 20 zusätzlich oder alternativ von dem inneren Getriebebauteil 14 ausgebildet sind. In dem dargestellten Ausführungsbeispiel können die Schmierstofftaschen über Verbindungskanäle 21 mit Schmierstoff versorgt werden, wobei sich die Verbindungskanäle durch das Gleitlager 16 und das äußere Getriebebauteil 18 erstrecken.

Um stromabwärts der Schmierstoffübergabeanordnung 10 eine zu schmierende Getriebekomponente, beispielsweise das Axialgleitlager für den Mahlteller mit Schmierstoff zu versorgen, ist ein Schmierstoffkanal 22 vorgesehen, der einen durch das äußere Getriebebauteil 18 und das Gleitlager 16 sowie eine in dem Gleitlager 16 ausgebildete Ringnut 24 verlaufenden Versorgungskanal 26 und einen mit einem Lagerspalt zwischen dem Gleitlager 16 und dem inneren Getriebebauteil 14 kommunizieren und in dem innere Getriebebauteil 14 ausgebildeten Abfuhrkanal 28 aufweist.

Grundsätzlich kann der Schmierstoffkanal 22 unabhängig und separat zu den Schmierstofftaschen 20 und den zugehörigen Verbindungskanälen 21 ausgebildet sein. In der vorliegenden Ausführungsform ist jedoch eine Leckagenut 30 vorgesehen, über die der Schmierstoffkanal 22 zusätzlich zu dem Lagerspalt des Gleitlagers 16 mit einem größeren Strömungsquerschnitt als der Lagerspalt des Gleitlagers 16 mit den Schmierstofftaschen 20 fluidisch kommunizieren kann. Dadurch können die Schmierstofftaschen 20 mit aus dem Schmierstoffkanal 20 abgezweigten Schmierstoff versorgt werden, wodurch es möglich ist die schmierstoffversorgung der Schmierstofftaschen 20 über die Verbindungskanäle 21 kleiner zu dimensionieren oder sogar ganz entfallen zu lassen. Der Versorgungskanal 26 des schmierstoffkanals mündet in der in Fig. 1 dargestellten Ausführungsform in aixaler Richtung zwischen den Schmierstofftaschen 20 in den Lagerspalt des Gleitlagers 16 ein, so dass in beiden Axialrichtungen die mit jeweils einer Schmierstofftasche 20 kommunizierende Leckagenut 30 vorgesehen ist. Im dargestellten Ausführungsbeispiel ist die Leckagenut 30 ausschließlich von dem inneren Getriebebauteil 14 ausgebildet, wobei es auch möglich ist, dass die Leckagenut 30 zusätzlich oder alternativ von dem Gleitlager 16 ausgebildet ist.

Bei der in Fig. 2 dargestellten Ausführungsform der Schmierstoffübergabeanordnung 10 ist im Vergleich zu der in Fig. 1 dargestellten Ausführungsform der Schmierstoffübergabeanordnung 10 in axialer Richtung nur eine Schmierstofftasche 20 ausgebildet. Der Versorgungskanal 26 des Schmierstoffkanals 22 kann oberhalb der Schmierstofftasche 20 in den Lagerspalt des Gleitlagers 16 einmünden, so dass die Schmierstofftasche 20 schwerkraftunterstützt aus dem Schmierstoffkanal 22 über die Leckagenut 30 mit Schmierstoff versorgt werden kann.

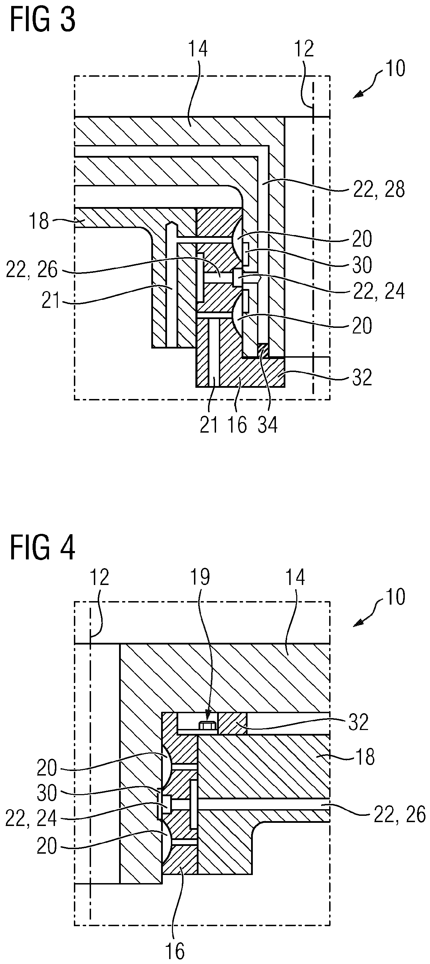

Bei der in Fig. 3 dargestellten Ausführungsform der Schmierstoffübergabeanordnung 10 ist im Vergleich zu der in Fig. 1 dargestellten Ausführungsform der Schmierstoffübergabeanordnung 10 das Gleitlager 16 mit einem an dem inneren Getriebebauteil 14 axial anliegenden Kragen 32 versehen, der von dem übrigen Gleitlager 16 nach radial innen absteht und eine axiale Einstecktiefe des Gleitlagers 16 auf dem inneren Getriebebauteil 14 begrenzt. Gleichzeitig kann der Kragen 32 gegen einen als Stopfen ausgestalteten Verschluss 34 des axial verlaufenden Teils des Abfuhrkanals 28 des Schmierstoffkanals 22 drücken und dadurch die Dichtwirkung verbessern. Alternativ kann die Drehdurchführung zwischen dem Versorgungskanal 26 und dem Abfuhrkanal 28 des Schmierstoffkanals 22 in axialer Richtung stirnseitig zwischen dem Kragen 32 und einer zum Kragen 32 weisenden nicht verschlossenen Öffnung des Abfuhrkanals 28 ausgebildet sein. Zusätzlich oder alternativ kann auch in dem Gleitlager 16 ein, insbesondere axial verlaufender, Teil des zur Schmierstofftasche 20 führender Verbindungskanals 21 ausgebilet sein, wobei der in dem Gleitlager 16 ausgebildete Verbindungskanal 21 zumkindest teilweise in dem Kragen 32 und/oder in dem vom Kragen 32 verschiedenen Teil des Gleitlagers 16 ausgebildet sein kann. Insbesondere ist der Verbindungskanal 21, vorzugsweise innerhalb des Gleitlagers 16, von dem Versorgungskanal 26 abgezweigt.

Bei der in Fig. 4 dargestellten Ausführungsform der Schmierstoffübergabeanordnung 10 ist im Vergleich zu der in Fig. 1 dargestellten Ausführungsform der Schmierstoffübergabeanordnung 10 das Gleitlager 16 mit einem an dem äußeren Getriebebauteil 18 axial anliegenden Kragen 32 versehen, der von dem übrigen Gleitlager 16 nach radial außen absteht und eine axiale Einstecktiefe des Gleitlagers 16 auf dem äußeren Getriebebauteil 18 begrenzt. Analog zu der mit Bezug zu Fig. 3 beschriebenen Ausgestaltung der Schmierstoffübergabeanordnung 10 kann der Kragen 32 gegen einen als Stopfen ausgestalteten Verschluss des axial verlaufenden Teils des Versorgungskanals 26 des Schmierstoffkanals 22 drücken und dadurch die Dichtwirkung verbessern. Alternativ kann die Schmierstoffübergabe des Versorgungskanals 26 des Schmierstoffkanals 22 zwischen Gleitlager 16 und dem äußeren Getriebebauteil 18 in axialer Richtung stirnseitig zwischen dem Kragen 32 und einer zum Kragen 32 weisenden nicht verschlossenen Öffnung des äußeren Getriebebauteils 18 ausgebildet sein.

## Patentansprüche

1. Schmierstoffübergabeanordnung (10) für eine Schmierstoffversorgung eines Getriebes, mit
einem äußeren Getriebebauteil (18),
einem relativ zu dem äußeren Getriebebauteil (18) drehbaren inneren Getriebebauteil (14),
einem Gleitlager (16) zur Lagerung des äußeren Getriebebauteils (18) an dem inneren Getriebebauteil (14), wobei zwischen dem äußeren Getriebebauteil (18) oder dem inneren Getriebebauteil (14) einerseits und dem Gleitlager (16) andererseits mindestens eine Schmierstofftasche (20) ausgebildet ist,
wobei ein durch das äußere Getriebebauteil (18), das Gleitlager (16) und das innere Getriebebauteil (14) hindurchführender Schmierstoffkanal (22) zur Versorgung einer an einem stromabwärts liegenden Ende des Schmierstoffkanals (22) vorgesehenen zu schmierenden Getriebekomponenten ausgebildet ist,
wobei der Schmierstoffkanal (22) an der Schmierstofftasche (20) vorbei verläuft und wobei zwischen dem äußeren Getriebebauteil (18) oder dem inneren Getriebebauteil (14) einerseits und dem Gleitlager (16) andererseits eine den Schmierstoffkanal (22) mit der Schmierstofftasche (20) fluidisch verbindende Leckagenut (30) ausgebildet ist.

2. Schmierstoffübergabeanordnung (10) nach Anspruch 1, wobei eine Leckagespalthöhe H der Leckagenut (30) in radialer Richtung größer als eine Lagerspalthöhe h zwischen dem äußeren Getriebebauteil (18) oder dem inneren Getriebebauteil (14) einerseits und dem Gleitlager (16) andererseits ist, wobei insbesondere 1,01 ≤ H/h ≤ 2,00, vorzugsweise 1,10 ≤ H/h ≤ 1,75 und besonders bevorzugt 1,25 ≤ H/h ≤ 1,50 gilt.

3. Schmierstoffübergabeanordnung (10) nach Anspruch 1 oder 2, wobei ein in die Schmierstofftasche (20) einmündender Verbindungskanal (21) vorgesehen ist, wobei der Verbindungkanal (21) mit einer Schmierstoffquelle zur Zufuhr von Schmierstoff in die Schmierstofftasche (20) und/oder mit einer Schmierstoffsenke zur Abfuhr von aus dem Schmierstoffkanal (22) stammenden Schmierstoff fluidisch verbunden ist.

4. Schmierstoffübergabeanordnung (10) nach einem der Ansprüche 1 bis 3, wobei das Gleitlager (16) einen radial abstehenden Kragen (32) zur axialen Anlage an dem äußeren Getriebebauteil (18) oder an dem inneren Getriebebauteil (14) aufweist.

5. Schmierstoffübergabeanordnung (10) nach Anspruch 4, wobei der Kragen (32) einen Verschluss (34) und/oder ein Dichtelement einer in axialer Richtung weisenden Öffnung eines Teilstücks des Schmierstoffkanals (22) abdeckt, insbesondere mit einer Anpresskraft abdichtet.

6. Schmierstoffübergabeanordnung (10) nach Anspruch 4, wobei der Kragen (32) eine in axialer Richtung weisenden Öffnung eines Teilstücks des Schmierstoffkanals (22) abdeckt und ein mit dem Teilstück kommunizierendes weiteres Teilstück des Schmierstoffkanals (22) ausbildet.

7. Schmierstoffübergabeanordnung (10) nach einem der Ansprüche 4 bis 6, wobei der Kragen (32) eine in axialer Richtung weisenden Öffnung eines mit der Schmierstofftasche (20) kommunizierenden und separat zum Schmierstoffkanal (22) ausgebildeten Verbindungkanal (21) abdeckt und ein mit dem Verbindungkanal (21) kommunizierenden weiteren Verbindungkanal ausbildet.

8. Schmierstoffübergabeanordnung (10) nach einem der Ansprüche 1 bis 7, wobei mindestens zwei Schmierstofftaschen (20) zumindest teilweise in einem gemeinsamen Umfangswinkelbereich in axialer Richtung hintereinander ausgebildet sind, wobei der Schmierstoffkanal (22) in axialer Richtung zwischen den zwei Schmierstofftaschen (20) hindurchgeführt ist und der Schmierstoffkanal (22) über jeweils eine in unterschiedliche Axialrichtungen von dem Schmierstoffkanal (22) abgehende Leckagenuten (30) mit den Schmierstofftaschen (20) fluidisch verbunden ist.

9. Schmierstoffübergabeanordnung (10) nach einem der Ansprüche 1 bis 7, wobei von dem Schmierstoffkanal (22) nur in einer Axialrichtung die Leckagenut (30), insbesondere nur genau eine Leckagenut (30), abgeht, wobei insbesondere nur in genau einem Axialbereich die Schmierstofftasche (20), insbesondere nur genau eine Schmierstofftasche (20), ausgebildet ist.

10. Schmierstoffübergabeanordnung (10) nach einem der Ansprüche 1 bis 9, wobei die Leckagenut (30) überwiegend in vertikaler Richtung verläuft, wobei insbesondere zumindest ein Teil des Schmierstoffs aus der dem Schmierstoffkanal (22) schwerkraftunterstützt durch die Leckagenut (30) förderbar ist.

11. Schmierstoffübergabeanordnung (10) nach einem der Ansprüche 1 bis 10, wobei das äußere Getriebebauteil (18) oder das innere Getriebebauteil (14) als feststehendes Getriebegehäuseteil ausgestaltet ist.

12. Vertikalgetriebe, insbesondere zum Betrieb einer Vertikalmühle, mit einer im Wesentlichen vertikal ausgerichteten Welle und einer Schmierstoffübergabeanordnung (10) nach einem der Ansprüche 1 bis 11, wobei die Welle das innere Getriebebauteil (14) oder das äußere Getriebebauteil (18) ausbildet.

13. Vertikalgetriebe nach Anspruch 12, wobei die Welle drehfest mit einem Planetenträger eines Planetengetriebes verbunden ist, wobei insbesondere mit dem Planetenträger ein Mahlteller einer Vertikalmühle befestigt ist.

14. Industrie-Applikation mit einem Getriebe, insbesondere Vertikalgetriebe nach Anspruch 12 oder 13, wobei das Getriebe mindestens eine zu schmierenden Getriebekomponente und mindestens eine Schmierstoffübergabeanordnung (10) nach einem der Ansprüche 1 bis 11 zur Förderung von Schmiermittel an die zu schmierende Getriebekomponente aufweist.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Schmierstoffübergabeanordnung (10) nach einem der Ansprüche 1 bis 11 vorgesehenen Bestandteile, wobei die Datenpakete dazu hergerichtet sind bei einer Verarbeitung durch eine Datenverarbeitungseinrichtung eine additive Herstellung der Bestandteile der Schmierstoffübergabeanordnung (10), insbesondere durch 3D-Druck, und/oder eine Simulation der Funktionsweise der Schmierstoffübergabeanordnung (10) durchzuführen.
